# FASCICULE DE BREVET EUROPEEN

(11) **EP 0 554 146 B1**
(45) Date de publication et mention de la délivrance du brevet: **03.04.1996**
(21) Numéro de dépôt: 93400152.0
(22) Date de dépôt: 22.01.1993
(51) Int. Cl.: F16B 21/00

(54) **Dispositif de fixation sur une pièce, en vue, notamment, d'en assurer l'assemblage avec une autre pièce**
Verbindungselement mit einem Bauteil, insbesondere zur Herstellung einer Verbindung zu einem anderen Bauteil
Fixation device on one part element, especially to establish a connection to a second part

(30) Priorité: 24.01.1992 FR 9200750
(43) Date de publication de la demande: 04.08.1993
(73) Titulaire: CLIP-OFF, F-92000 Nanterre (FR)
(72) Inventeur: Barikosky, Michel, F-75007 Paris (FR); Girardiere, Christian, F-75116 Paris (FR)
(74) Mandataire: Bloch, Robert

(56) Documents cités:
- DE-A- 1 284 161
- DE-A- 3 008 990
- US-A- 3 169 439
- US-A- 4 114 509

## Description

La présente invention concerne un dispositif de fixation sur une pièce percée d'un trou débouchant, en vue, notamment, d'en assurer l'assemblage avec au moins une autre pièce (voir US-A 4 114 509).

Parmi ces dispositifs figurent entre autres les rivets, les vis et les boulons. Ceux-ci présentent des inconvénients, notamment d'être indémontables pour certains, tels que les rivets, ou difficilement démontables et nécessiter une pluralité d'éléments distincts pour les autres, tels que vis et boulons.

L'invention a pour objet un dispositif de ce genre mais qui ne présente pas ces inconvénients, c'est-à-dire qui soit facilement montable et démontable sans exiger de manipulation délicate.

Ce nouveau dispositif du type comportant un corps, muni à une extrémité, d'une tête à rebord en saillie par rapport audit corps et dans lequel est ménagée une cavité centrale communiquant avec l'extérieur et que ledit corps possède au moins une portion de paroi, dont la face intérieure délimite partie de ladite cavité, et qui est déformable élastiquement sous l'action d'une force, exercée de l'extérieur, agissant sur ladite face intérieure, ladite portion de paroi présentant sur sa face extérieure un saillant qui délimite, avec ledit rebord de la tête, une mâchoire par laquelle le dispositif peut s'engager sur ladite pièce et qui, par déformation de ladite portion de paroi, s'ouvre et libère la pièce et le dispositif l'un de l'autre, et que des moyens provenant d'une source de pression ou de vide pouvant communiquer avec ladite cavité qui est rendue étanche sont prévus pour exercer de l'extérieur ladite force de déformation.

L'étanchéité de la cavité peut être réalisée par ajustement glissant matière sur matière, d'élément saillant contre ses parois adjacentes, ou par l'adjonction de joints périphériques entre l'élément saillant et ses parois adjacentes ou par une membrane élastique venue de fabrication avec les éléments mêmes.

Le dispositif selon l'invention est le plus généralement utilisable, à la manière d'un rivet, par exemple, pour assembler au moins deux pièces, telles que des plaques juxtaposées, le dispositif étant dans ce cas inséré dans un trou traversant les deux pièces. Il peut aussi servir d'obturateur en étant inséré dans l'orifice d'une pièce à obturer.

A titre nullement limitatif on a représenté aux dessins annexés un certain nombre de formes de réalisation du dispositif selon l'invention, dessins sur lesquels :
- la figure 1 est une vue en perspective d'une forme de dispositif au repos, c'est-à-dire avant déformation des parties à saillir,
- la figure 2 est une vue du dispositif de la figure 1 actionné, c'est-à-dire après déformation,
- la figure 3 est une vue en élévation latérale du dispositif de la figure 1,
- la figure 4 est une vue de dessus du dispositif de la figure 1, en coupe selon A-A de la figure 3,
- la figure 5 est une vue en coupe axiale du dispositif de la figure 1 lors de sa fixation sur une pièce, par déformation sous vide,
- la figure 6 est une vue en coupe d'une variante du dispositif, et
- la figure 7 est une vue en perspective du dispositif de la figure 6 dans sa forme prise après montage,
- la figure 8 est une vue du dispositif de la figure 6 avant son montage dans les trous des pièces à fixer ensemble,
- la figure 9 est une vue en coupe du dispositif de la figure 6 utilisé comme obturateur.

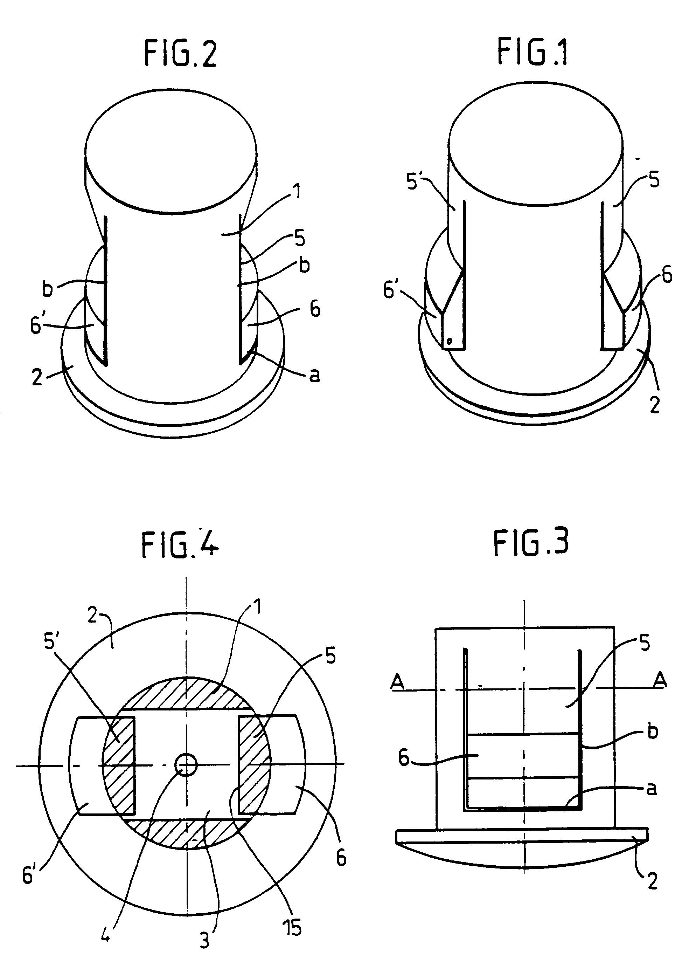

Dans l'exemple de réalisation représenté aux figures 1 à 4, le dispositif de fixation est constitué par un corps rigide 1 cylindrique muni d'une tête à rebord annulaire 2 saillant du corps 1.

A l'intérieur du corps 1 est ménagée une cavité 3 communiquant avec l'extérieur par un orifice central 4. Deux portions de paroi du corps, diamétralement opposées, 5-5' présentent à leur partie basse, chacune, un saillant 6-6', qui est, axialement, à l'aplomb du rebord 2 de la tête de l'attache.

Ces deux portions de paroi 5-5' sont déformables élastiquement en basculant vers l'intérieur du corps sous l'action de forces exercées de l'extérieur dans la cavité 3. Ici ces forces résultent de l'action du vide produit dans la cavité 3 par une pompe extérieure communiquant avec elle par l'orifice 4.

Entre les surfaces de contact périphériques de l'élément saillant et des parois adjacentes du corps sont interposés des joints a,a'-b,b'.

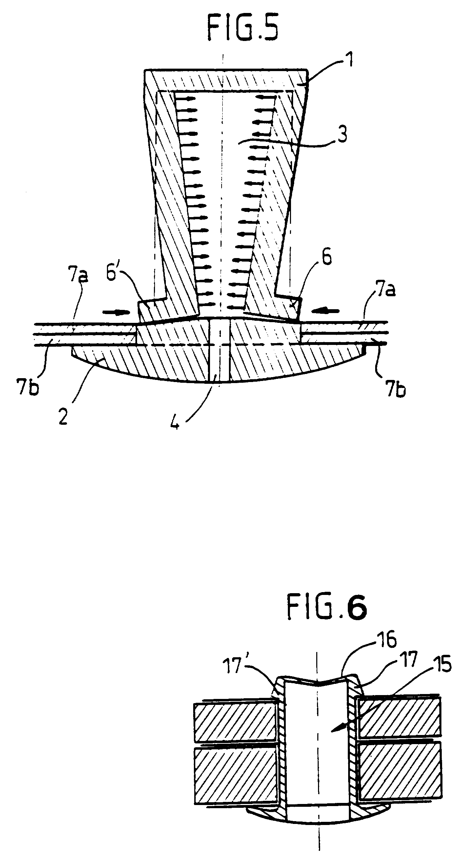

La figure 5 illustre le processus de mise en place, ou accrochage, du dispositif des figures 1 à 4, sur une pièce 7 constituée par deux plaques juxtaposées 7a-7b et dans laquelle est ménagée une ouverture 8 circulaire de diamètre sensiblement égal à celui du corps 1 du dispositif.

L'action du vide dans la cavité 3, génère une différence de pression entre la pression extérieure et cette cavité et provoque la flexion vers l'intérieur des saillants 6-6' qui cessent de faire saillie par rapport au corps. Le corps 1 peut alors traverser l'ouverture 8 et le bord 2 de la tête s'appliquer contre la face inférieure de la pièce double 7a-7b.

La cessation du vide, c'est-à-dire la mise à la pression atmosphérique de la cavité 3 provoque le retour instantané, par rappel élastique, des saillants 6-6' en position sortie, ou écartée, donc à l'aplomb du rebord 2.

Les deux plaques 7a-7b de la pièce 7 se trouvent, alors, assemblées par serrage entre le bord 2 et les saillants 6-6'.

Dans l'exemple des figures 6 à 8, la cavité est un passage axial 15 traversant le corps et délimité en partie par une paroi 16 élastiquement déformable venue de fabrication avec le corps, et les saillants 17,17' sont situés au niveau supérieur du corps opposé à la tête 18.

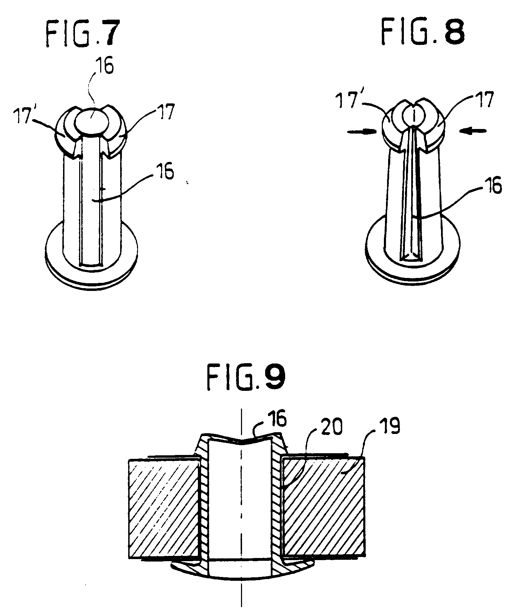

Le dispositif représenté à la figure 9 est identique à celui de la figure 6, mais utilisé comme obturateur d'un orifice 20 de récipient 19.

Le dispositif de l'invention se met en place en introduisant son corps dans le trou ménagé dans la pièce jusqu'à application du rebord de la tête sur une face de cette pièce. La fixation comme le démontage s'opère alors par application de la force de déformation dont la source est située notamment du même côté de cette face que le rebord de la tête.

Le dispositif de l'invention est donc du type "en aveugle", c'est-à-dire utilisable même en n'ayant accès que d'un seul côté de la pièce.

On peut aussi associer à un dispositif de l'invention, fixé sur des pièces à assembler, un dispositif de même type qui, inséré dans le précédent, en assurera le verrouillage.

## Revendications

1. Dispositif de fixation amovible sur une pièce, du type comportant un corps muni, à une extrémité, d'une tête à rebord en saillie par rapport au dit corps et présentant une cavité centrale communiquant avec l'extérieur du corps et possédant au moins une portion de paroi (5), dont la face intérieure (15) délimite partie de ladite cavité (3), et qui est déformable élastiquement sous l'action d'une force, exercée de l'extérieur, agissant sur ladite face intérieure (15), ladite portion de paroi (5) présentant sur sa face extérieure un saillant (6) qui délimite avec ledit rebord de la tête, une mâchoire par laquelle le dispositif peut s'engager sur ladite pièce sur laquelle il doit se fixer, et qui, par déformation de ladite portion de paroi (5), s'ouvre et libère la pièce et le dispositif l'un de l'autre, et des moyens sont prévus pour exercer de l'extérieur ladite force de déformation, caractérisé par le fait que les moyens exerçant la force de déformation sont des sources de pression ou de vide et la cavité (3) est sensiblement étanche.

2. Dispositif selon la revendication 1 dans lequel la cavité (3) est rendue étanche par ajustement glissant matière sur matière, d'élément saillant contre ses parois adjacentes.

3. Dispositif selon la revendication 1 dans lequel la cavité (3) est rendue étanche par adjonction de joints périphériques entre l'élément saillant et ses parois adjacentes.

4. Dispositif selon la revendication 1 dans lequel la cavité (3) est rendue étanche par une membrane élastique venue de fabrication avec les éléments mêmes.

5. Dispositif selon l'une des revendications 1 à 4, caractérisé par le fait qu'il est utilisé comme obturateur d'un orifice de récipient.

6. Dispositif selon l'une des revendications 1 à 4 dans lequel la cavité est un passage axial traversant le corps, dont la tête ou la partie supérieure est taraudée pour servir d'écrou à une pièce filetée.

7. Dispositif selon l'une des revendications 1 à 6 inséré dans un dispositif similaire pour en assurer le verrouillage.

## Patentansprüche

1. Vorrichtung zur lösbaren Befestigung auf einem Teil, wobei die Vorrichtung einen Körper umfaßt, der an einem Ende mit einem als Kopf ausgebildeten im Verhältnis zum Körper überstehenden Rand versehen ist, und einen zentralen Hohlraum aufweist, der mit der Außenseite des Körpers in Verbindung steht, und mindestens einen Wandbereich (5) besitzt, dessen Innenfläche (15) einen Teil des Hohlraums (3) begrenzt, und die unter Krafteinwirkung elastisch verformbar ist, wobei die auf der Außenseite aufgebrachte Kraft auf die Innenfläche (15) einwirkt, wobei der Wandbereich (5) auf seiner Außenfläche einen Vorsprung (6) aufweist, der mit dem als Kopf ausgebildeten Rand eine Klemme begrenzt, durch welche die Vorrichtung in Eingriff mit dem Teil gelangen kann, auf dem sie befestigt wird, und der sich durch Verformung des Wandbereichs (5) öffnet und die Vorrichtung von dem Teil freigibt, und wobei Einrichtungen vorgesehen sind, um die Verformungskraft auf die Außenseite aufzubringen,
dadurch gekennzeichnet,
daß die Einrichtungen zur Aufbringung der Verformungskraft Druck- oder Unterdruckquellen sind, und daß der Hohlraum (3) im wesentlichen dicht ist.

2. Vorrichtung nach Anspruch 1,
dadurch gekennzeichnet,
daß der Hohlraum (3) durch eine gleitende Passung von Material auf Material abgedichtet ist, wobei das Element von den daran angrenzenden Wänden vorsteht.

3. Vorrichtung nach Anspruch 1
dadurch gekennzeichnet,
daß der Hohlraum (3) durch Anordnung von periphären Verbindungsstellen zwischen dem vorstehenden Element und den daran angrenzenden Wänden abgedichtet ist.

4. Vorrichtung nach Anspruch 1,
dadurch gekennzeichnet,
daß der Hohlraum (3) durch eine elastische Membran abgedichtet ist, die herstellerseitig schon mit den Elementen versehen ist.

5. Vorrichtung nach einem der Ansprüche 1 bis 4,
dadurch gekennzeichnet,
daß sie als Verschlußvorrichtung für eine Öffnung eines Behälters verwendet wird.

6. Vorrichtung nach einem der Ansprüche 1 bis 4,
dadurch gekennzeichnet,
daß der Hohlraum (3) ein den Körper durchquerender axialer Durchgang ist, wobei der Kopf oder der obere Bereich des Körpers mit einem Innengewinde versehen ist, um als Mutter für ein Teil mit Außengewinde zu dienen.

7. Vorrichtung nach einem der Ansprüche 1 bis 6,
dadurch gekennzeichnet,
daß die Vorrichtung in eine ähnliche Vorrichtung eingefügt wird, um damit die Verriegelung zu sichern.

## Claims

1. A fastener for a part, from which it can be removed again, comprising
a body a flanged head projecting from one end of said body ;
a central cavity (3) within said body and communicating with outside of the body;
at least one wall portion (5) of said body having an inner side (15) bounding a segment of said cavity, wherein
said wall portion elastically deforms when an outside force is applied to said wall portion (15),
a projection (6) on an outer side of said wall portion (5), wherein said projection and said flanged head bound a jaw by means of which the fastener can be affixed to said part and on account of the deformation of said wall portion (5) the projection will open and release the part and the fastener from each other ; and
means for applying said deforming force, from the outside, characterized in that the deforming-force means are pressure or vacuum sources, and the cavity (3) is substantially sealed.

2. Fastener according to claim 1, wherein the cavity (3) is sealed by a material-on-material sliding motion of the projection against adjacent walls of said body.

3. Fastener according to claim 1, wherein the cavity (3) is sealed by inserting peripheral seals between the projection and adjacent walls of said body.

4. Fastener according to claim 1, wherein the cavity (3) is sealed by an elastic membrane integrated during manufacture into the other components.

5. Fastener according to one of claims 1 to 4, characterized in that it serves as a closure means for a receptacle orifice.

6. Fastener according to one of claims 1 to 4, wherein the cavity is a continuous axial passage through the body of which the head or upper part is threaded to act as a nut for a threaded part.

7. Fastener according to one of claims 1 to 6, inserted into a similar fastener.
